Europäisches Patentamt

European Patent Office

Office européen des brevets

(11) Veröffentlichungsnummer : **0 452 802 B1**

(12) **EUROPÄISCHE PATENTSCHRIFT**

(45) Veröffentlichungstag der Patentschrift :
**08.03.95 Patentblatt 95/10**

(51) Int. Cl.⁶ : **G02C 7/02**

(21) Anmeldenummer : **91105734.7**

(22) Anmeldetag : **11.04.91**

(54) **Gleitsichtfläche für eine Gleitsichtbrillenlinse.**

(30) Priorität : **19.04.90 DE 4012609**

(43) Veröffentlichungstag der Anmeldung :
**23.10.91 Patentblatt 91/43**

(45) Bekanntmachung des Hinweises auf die
Patenterteilung :
**08.03.95 Patentblatt 95/10**

(84) Benannte Vertragsstaaten :
**AT CH DE ES FR GB IT LI NL SE**

(56) Entgegenhaltungen :
**EP-A- 0 039 497**
**WO-A-86/01308**
**DE-A- 2 044 639**
**GB-A- 2 100 877**
**GB-A- 2 146 791**
**OPTIK. Bd. 70, Nr. 1, April 1985, STUTTGART,**
**DE Seiten 19 - 28; G. FÜRTER: 'Optik-Konstruk-**
**tion mit Slines'**
**DOZ Nr. 11, 20. November 1980, DE Seiten 20 -**
**23; G. GUILINO ET R. BARTH: 'Neueprogres-**
**sive Flächen'**

(73) Patentinhaber : **Firma Carl Zeiss**
**D-73446 Oberkochen (DE)**
㊋ **CH DE ES FR IT LI NL SE AT**
Patentinhaber :
**CARL-ZEISS-STIFTUNG,HANDELND ALS CARL**
**ZEISS**
**D-73446 Oberkochen (DE)**
㊋ **GB**

(72) Erfinder : **Kelch, Gerhard**
**Egerlandstrasse 62/1**
**W-7080 Aalen (DE)**
Erfinder : **Lahres, Hans**
**Am Sattel 5**
**W-7080 Aalen-Wasseralfingen (DE)**
Erfinder : **Wietschorke, Helmut**
**Kolpingstrasse 34**
**W-7080 Aalen-Wasseralfingen (DE)**

**Beschreibung**

Die vorliegende Erfindung betrifft eine Gleitsicht-Brillenlinse nach dem Oberbegriff des Anspruchs 1.

Eine Gleitsicht-Brillenlinse besitzt eine Fläche, welche den gewünschten Brechwertverlauf der Brillenlinse bewirkt und die als Gleitsichtfläche bezeichnet ist. Diese Gleitsichtfläche kann objekt- oder augenseitig angeordnet sein und wird durch die zweite Linsenfläche ergänzt. Die optische Wirkung dieser zweiten Linsenfläche, die Brechzahl des Linsenmaterials und dessen Dicke bestimmen zusammen mit der Gleitsichtfläche die dioptrische Wirkung der Brillenlinse. Diese muß so beschaffen sein, daß die Fehlsichtigkeit des Benutzers optimal korrigiert wird.

Gleitsichtlinsen sind seit vielen Jahren bekannt und werden von mehreren Herstellern angeboten. Als Beispiel sei die unter der Bezeichnung "GRADAL HS" angebotene Gleitsichtlinse der Anmelderin genannt, die in der DE-PS 30 16 935 (EP-A-0 039 497) beschrieben ist.

Eine weitere Gleitsichtlinse ist aus der DE-AS 20 44 639 bekannt. Diese Linse weist einen ombilischen Meridian auf, d.h. längs eines Meridians, der die Gleitsichtfläche in einen nasalen und einen temporalen Bereich teilt, hat der Flächenastigmatismus den Wert 0. Aufgrund dieses und anderer einschränkender Merkmale ist die Breite des Nahteils, über welche der Flächenastigmatismus < 0,5 dpt bleibt klein, so daß der Benutzer beim Blick nach der Seite schon ab kleinen Sehwinkeln zu Kopfdrehungen gezwungen ist.

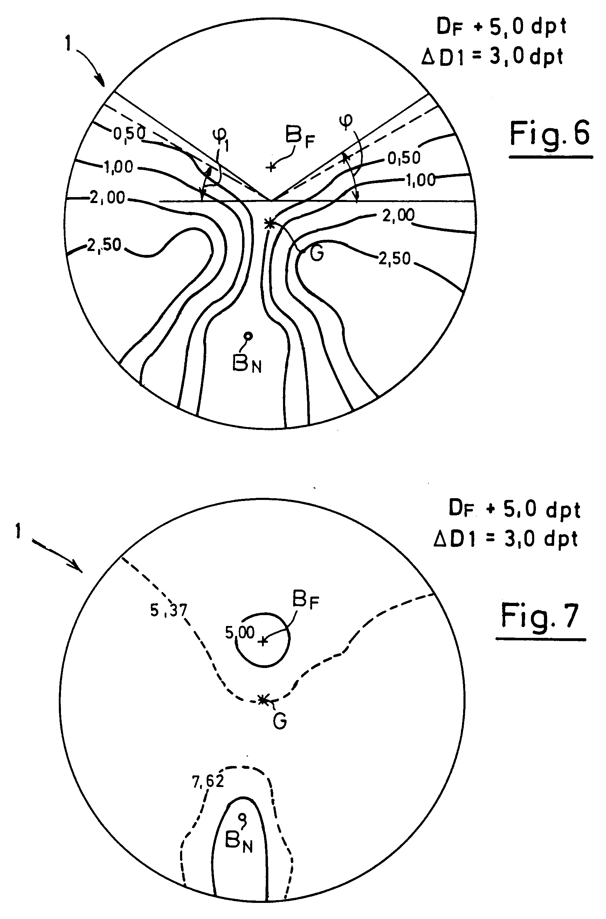

In der Zeitschrift DOZ Nr. 11 vom 20.11.1980 sind auf den Seiten 20 - 23 weitere Gleitsichtlinsen beschrieben. Wie man aus Abbildung 6 auf Seite 23 erkennt erreicht der Flächenastigmatismus seitlich des Meridians, vor allem im Bereich der Progressionszone schnell so hohe Werte, daß diese Bereiche für ein deutliches Sehen nicht benutzt werden können.

Die aus der DE-PS 30 16 935 bekannte Gleitsichtlinse genügt in jedem Bereich allen, den jeweiligen Sehaufgaben entsprechenden monokularen und binokularen Anforderungen an Schärfe und Verträglichkeit weitgehendst.

Es ist nun die Aufgabe der vorliegenden Erfindung eine Gleitsichtlinse zu schaffen, die unter Beibehaltung der aus der DE-PS 30 16 935 bekannten wesentlichen Eigenschaften eine breitere Progressionszone aufweist und bei der der Maximalwert, den der Flächenastigmatismus auf der Gleitsichtfläche erreicht, kleiner ist.

Diese Aufgabe wird erfindungsgemäß durch eine Gleitsichtlinse gelöst, welche die im kennzeichnenden Teil des Anspruchs 1 angeführte Merkmalskombination erfüllt.

Im folgenden ist davon ausgegangen, daß die Gleitsichtfläche der Linse zweimal stetig differenzierbar ist und die maßgeblichen Eigenschaften bestimmt sind durch den mittleren Flächenbrechwert

$$D \quad = \frac{n-1}{2} \cdot \left( \frac{1}{r_1} + \frac{1}{r_2} \right)$$

und den Flächenastigmatismus

$$\left| (n-1) \left( \frac{1}{r_1} - \frac{1}{r_2} \right) \right|$$

($r_1$, $r_2$ = Hauptkrümmungsradien gemessen in m, um die Werte in Dioptrien zu erhalten) an allen Punkten der Gleitsichtfläche. Sind mittlerer Flächenbrechwert und Flächenastigmatismus für jeden Punkt der Fläche bekannt, dann ist die Fläche vollständig bestimmt.

Bei der Gleitsichtfläche nach der Erfindung sind die Merkmale b und f auf einen Linsendurchmesser von 50 mm beschränkt, der einem Sehwinkel von ca. 40° entspricht. Es finden nur selten Blickbewegungen des Auges statt, die über diesen Linsendurchmeser hinausführen, so daß außerhalb dieses Durchmessers liegende Linsenbereiche für das Sehen praktisch keine Rolle spielen.

Die Merkmalskombination des Anspruchs 1 läßt sich für eine Gleitsichtfläche erfüllen, deren mittlerer Flächenbrechwert in der Fernsichtzone zwischen + 3,0 dpt und + 7,0 dpt liegt und die in der Nahsichtzone einen Flächenzusatz $\Delta D1$ zwischen 0,75 dpt und + 3,0 dpt hat, d.h. für alle üblicherweise verordneten Additionen. Der Flächenzusatz $\Delta D1$ ist definiert als die Differenz des mittleren Flächenbrechwertes $D_N$ im Nahbezugspunkt und des mittleren Flächenbrechwertes $D_F$ im Fernbezugspunkt. Mit den angegebenen mittleren Flächenbrechwerten der Gleitsichtfläche lassen sich durch entsprechende Wahl der zweiten Linsenfläche Brillenlinsen herstellen, deren dioptrische Wirkung zwischen - 6 dpt und + 5 dpt liegt. Evtl. astigmatische Fehler des Benutzerauges werden durch Verwendung einer zweiten Linsenfläche von torischer Gestalt korrigiert.

Die Merkmalskombination nach dem kennzeichnenden Teil des Anspruchs 1 läßt sich also für eine Gleitsichtfläche nach dem Oberbegriff dieses Anspruches erfüllen.

Merkmal a legt die, für den normalen Gebrauch einer Brillenlinse bestimmte Lage der Bezugspunkte fest, auf die sich alle Rechnungen beziehen. Merkmal b berücksichtigt die Tatsache, daß im Zusammenhang mit höheren Flächenzusätzen die Größe der störungsfreien Fernsichtzone abnimmt und gibt dem Fachmann den klaren Hinweis wie er unter Erfüllung der übrigen Merkmale diesen Bereich optimal groß halten kann, ohne daß in diesem Bereich ein Wert des Flächenastigmatismus > = 0,5 dpt den Visus unzulässig mindert. Zugleich erhält der Fachmann den Hinweis wo die entsprechende Grenzlinie des Flächenastigmatismus liegt.

Merkmal c gibt einen wesentlichen Hinweis auf die Länge der Progressionszone, während Merkmal d die Breite der Progressionszone in Abhängigkeit vom Flächenzusatz $\Delta D1$ angibt.

Merkmal e gibt die Breite der Nahsichtzone in Abhängigkeit vom Flächenzusatz $\Delta D1$ an, d.h. der Konstrukteur weiß welche Breite jeweils zu erreichen ist und kann seine Berechnung entsprechend führen.

Merkmal f gibt an, welcher Maximalwert des Flächenastigmatismus über den gesamten Bereich der Gleitsichtfläche in Abhängigkeit vom Flächenzusatz $\Delta D1$ in Kauf genommen werden muß, so daß der Konstrukteur seine Optimierungsrechnung entsprechend führen kann.

Bei den aus dem Stand der Technik bekannten Gleitsichtflächen bzw. Gleitsichtlinsen sind zwar einzelne der Merkmale a bis f erfüllt, jedoch nicht alle zusammen. Erst die Erfüllung aller Merkmale a bis f erlaubt es eine Gleitsichtfläche und damit eine Gleitsichtlinse zu schaffen, welche bei hervorragender Akzeptanz und Verträglichkeit dem Benutzer entsprechend seines erforderlichen Flächenzusatzes optimale Seheigenschaften unter allen üblicherweise vorkommenden Gebrauchsbedingungen garantiert.

Die Unteransprüche 2 bis 4 geben an, wie einzelne Merkmale der Kombination nach Anspruch 1 verändert werden können um Verbesserungen der Gleitsichtfläche zu erreichen.

Zur Berechnung der Gleitsichtfläche wird zunächst ein Flächenansatz gewählt, der beispielsweise von der aus der DE-PS 30 16 935 bekannten Gleitsichtfläche ausgeht. Zweckmäßig wird dazu die Fläche in Splines dargestellt, wie es aus dem Buch von H. Späth "Spline-Algorithmen zur Konstruktion von glatten Kurven und Flächen", 2. Auflage, R. Oldenbourg-Verlag München - Wien 1978 bekannt ist. Diese Spline-Darstellung hat den Vorteil, daß die Fläche zweimal stetig differenzierbar und damit von vornherein ohne Sprung- und Knickstellen ist. Danach werden eine Vielzahl von Punkten innerhalb der Fläche so gewählt, daß sich in diesen die Merkmale a bis f kontrollieren lassen. In diesen Punkten wird dann für den Flächenansatz jeweils Flächenastigmatismus und mittlerer Flächenbrechwert berechnet und diese Rechnung wird mit den Sollwerten verglichen, welche sich aus den Merkmalen a bis f ergeben. Dabei ergeben sich Differenzen und der Konstrukteur ändert die Parameter der Spline-Darstellung solange, bis die Forderungen erfüllt sind, d.h. bis in den ausgewählten Punkten die Sollwerte erreicht sind. Diese gezielten Änderungen der Parameter erfolgen unter Zuhilfenahme eines Optimierungsprogrammes. Solche Programme sind am Markt erhältlich (z.B. Code five) oder sind für den Fachmann z.B. aus den im Lehrbuch "Practical Optimization" Academic Press, Inc. 1981 dargestellten Algorithmen herleitbar. Die so errechnete Gleitsichtfläche erfüllt also die aus den Merkmalen a bis f hergeleiteten Forderungen.

Bei der Gleitsichtfläche nach der Erfindung ist die Hauptblicklinie nicht als ombilische Linie ausgebildet, d.h. es existiert längs dieser Linie Flächenastigmatismus, der jedoch Werte von 0,5 dpt nicht überschreitet.

Die Berechnung der Gleitsichtfläche nach der Erfindung kann so geführt werden, daß neben den Merkmalen a bis f auch noch zusätzliche Forderungen erfüllt werden. Beispielsweise läßt sich die Forderung erfüllen, daß Punkte mit gleichem horizontalen Abstand von der Hauptblicklinie und gleicher Höhe angenähert gleiche Werte von Flächenastigmatismus und mittlerem Flächenbrechwert aufweisen. Außerdem läßt sich die Berechnung so führen, daß die durch Hinzufügen der zweiten Linsenfläche hergestellte Brillenlinse die Bedingungen erfüllt, welche für ein angenehmes binokulares Sehen bezüglich der prismatischen Richtungsdifferenzen notwendig sind.

Eine mit einer Gleitsichtfläche nach der Erfindung ausgestattete Gleitsichtlinse zeichnet sich durch eine kurze, optimal breite Progressionszone und eine optimal breite Nahsichtzone aus, sodaß der Benutzer die häufigsten Sehaufgaben seiner täglichen Arbeit ohne zusätzliche, durch allzu schmale nutzbare Sehbereiche bedingte Kopfdrehungen erledigen kann. Außerdem ist durch die kurze Progressionszone erreicht, daß bei den üblichen Sehaufgaben der Kopf nur wenig gehoben und/oder gesenkt werden muß.

Der geringe Flächenastigmatismus der neuen Gleitsichtfläche in den Randbereichen erzeugt für den Brillenträger einen entsprechend kleinen Astigmatismus schiefer Bündel und damit eine entsprechend geringe Unschärfe und eine harmonische Verzeichnung.

Die Herstellung der Gleitsichtfläche nach der Erfindung ist mit Hilfe von numerisch codierten Bearbeitungsmaschinen möglich. Solche Maschinen sind am Markt erhältlich. Es ist möglich Brillenlinsen mit der erfindungsgemäßen Gleitsichtfläche aus anorganischem oder aus organischem Material herzustellen. Zur Herstellung aus organischem Material kann beispielsweise die bekannte Technik des Formgießens verwendet werden.

Die Erfindung wird im folgenden anhand der Ausführungsbeispiele darstellenden Figuren 1 bis 8 der beigefügten Zeichnungen näher erläutert. Der Flächenbrechwert $D_F$ für die Ferne beträgt bei allen dargestellten Gleitsichtflächen + 5,0 dpt. Im einzelnen zeigen:

Fig. 1 eine Gleitsichtfläche in Draufsicht;

Fig. 2 den Flächenastigmatismus für eine Gleitsichtfläche mit dem Flächenzusatz $\Delta D1$ = 1,0 dpt;

Fig. 3 den mittleren Flächenbrechwert für die Fläche nach Fig. 2;

Fig. 4 den Flächenastigmatismus für eine Gleitsichtfläche mit dem Flächenzusatz $\Delta D1$ = 2,0 dpt;

Fig. 5 den mittleren Flächenbrechwert für die Fläche nach Fig. 4;

Fig. 6 den Flächenastigmatismus für eine Gleitsichtfläche mit dem Flächenzusatz $\Delta D1$ = 3,0 dpt;

Fig. 7 den mittleren Flächenbrechwert für die Fläche nach Fig. 6;

Fig. 8 eine Pfeilhöhen-Darstellung einer Gleitsichtfläche mit dem Flächenzusatz $\Delta D1$ = 1,0 dpt, bezogen auf eine Ebene.

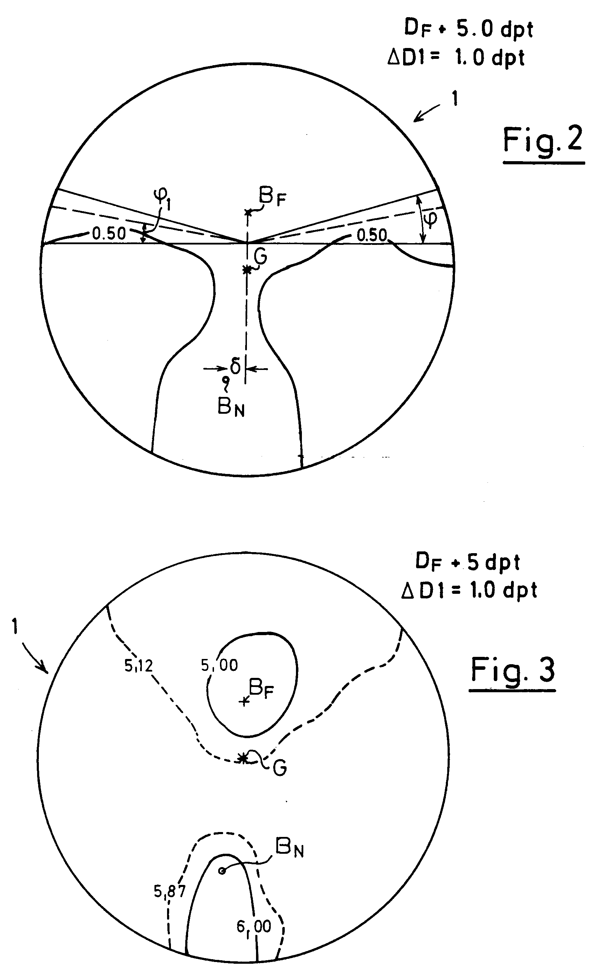

Die Figuren 2 bis 8 sind alle für einen Durchmesser der Gleitsichtfläche von 50 mm dargestellt, was etwa einem Sehwinkel von 40° entspricht.

Die Darstellung des Flächenastigmatismus in den Figuren 2, 4 und 6 ist so gestaltet, daß ausgehend von der Linie entlang der ein Flächenastigmatismus von 0,5 dpt besteht weitere Linien gezeichnet sind, entlang welcher der Flächenastigmatismus jeweils um 0,5 dpt zugenommen hat, d.h. die dargestellten Linien zeigen Werte des Flächenastigmatismus von 0,5 dpt, 1,0 dpt, 1,5 dpt usw..

Die Darstellung des mittleren Flächenbrechwertes in den Figuren 3, 5 und 7 ist so gestaltet, daß jeweils die Linien gestrichelt dargestellt sind, zwischen denen die Differenz des Flächenzusatzes 75 % von $\Delta D1$ beträgt.

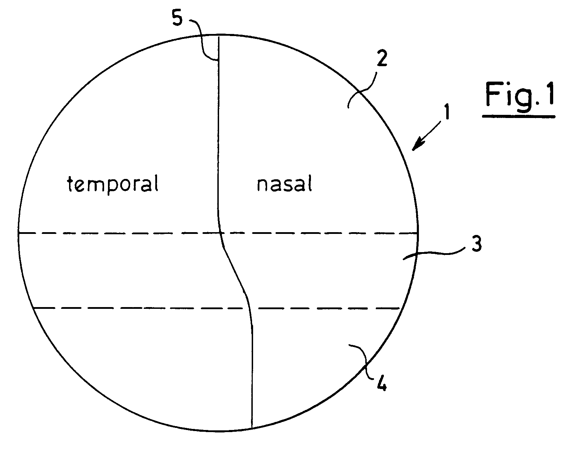

Figur 1 zeigt eine Gleitsichtfläche (1), die in ihrem oberen Teil die Fernsichtzone (2) aufweist. An diese schließt sich die Progressionszone (3) an, die in die Nahsichtzone (4) übergeht. Blickt das hinter der Brillenlinse (1) gedachte Auge des Benutzers durch die Fernsichtzone (2) geradeaus auf einen unendlich weit entfernten Punkt, so liegt der Durchstoßpunkt des Sehstrahls im Fernteil (2) auf der Linie (5). Nähert sich, bei sich senkendem Blick der Objektpunkt dem Auge bis auf die Leseentfernung, so führt das Augenpaar eine Konvergenzbewegung aus. Der Durchstoßpunkt der Sehstrahlen folgt der Kurve (5), die im folgenden als Hauptblicklinie bezeichnet ist. Diese Linie teilt die Brillenlinse (1) in einen nasalen und einen temporalen Bereich, d.h. die Berechnung der Gleitsichtfläche ist auf die Hauptblicklinie (5) bezogen. Damit ist eine Gleitsicht-Brillenlinse, welche die Gleitsichtfläche augen- oder objektseitig aufweist, eine sogenannte unsymmetrische Linse, d.h. die Linsen für das rechte und das linke Auge des Benutzers sind unterschiedlich. Eine solche Linse ist, verglichen mit einer symmetrischen Linse, bei der anstelle der Hauptblicklinie ein gerader senkrechter Meridian verwendet ist, aufwendiger in der Herstellung, bietet jedoch den entscheidenden Vorteil, daß sie beim Einsetzen in die Brillenfassung nicht gedreht werden muß. Damit bleiben die optischen Verhältnisse der Gleitsicht-Brillenlinse nach dem Einsetzen in die Fassung gegenüber der Berechnung unverändert.

Die Darstellungen der Figuren 2 bis 8 sind jeweils auf ein Brillenmaterial mit der Brechzahl n = 1,5251 bezogen. Der Flächenbrechwert $D_F$ für die Ferne der dargestellten Gleitsichtfläche beträgt jeweils + 5,0 dpt.

In Figur 2 ist der Fernbezugspunkt mit $B_F$ und der Nahbezugspunkt mit $B_N$ bezeichnet. Als geometrische Mitte G ist ein Punkt bezeichnet, der 7 mm unter dem Fernbezugspunkt $B_F$ liegt. Der Nahbezugspunkt $B_N$ liegt 14 mm unterhalb dieser geometrischen Mitte G. Der Nahbezugspunkt $B_N$ ist um einen Betrag von $\delta$ = 2,5 mm gegenüber dem Fernbezugspunkt $B_F$ nasal versetzt.

Figur 2 zeigt die Linie entlang welcher der Flächenastigmatismus einen Wert von 0,5 dpt erreicht. Der Wert des Flächenastigmatismus von 1,0 dpt ist nicht gezeichnet, da die entsprechende Linie außerhalb des dargestellten Durchmessers von 50 mm liegt.

In Figur 2 ist auch der Winkel $\varphi$ eingezeichnet, welcher in Merkmal b des Anspruchs 1 genannt ist. Man erkennt, daß der Flächenastigmatismus für alle Punkte mit $\varphi > 15°$ unterhalb von 0,5 dpt liegt. Auch für einen Wert des Winkels $\varphi_1$ nach Unteranspruch 2 liegt der Flächenastigmatismus unterhalb dieses Wertes.

Aus den Figuren 2 und 3 geht ferner hervor, daß 75% des Flächenzusatzes $\Delta D1$ auf einer Länge von etwa 9 mm in der Progressionszone erreicht werden, wobei die Länge der Progressionszone selbst etwa 14 mm beträgt. Die Mindestbreite der Progressionszone ist mehr als 5 mm. In der Höhe des Nahbezugspunktes $B_N$ ist die Breite der Nahsichtzone > 16 mm.

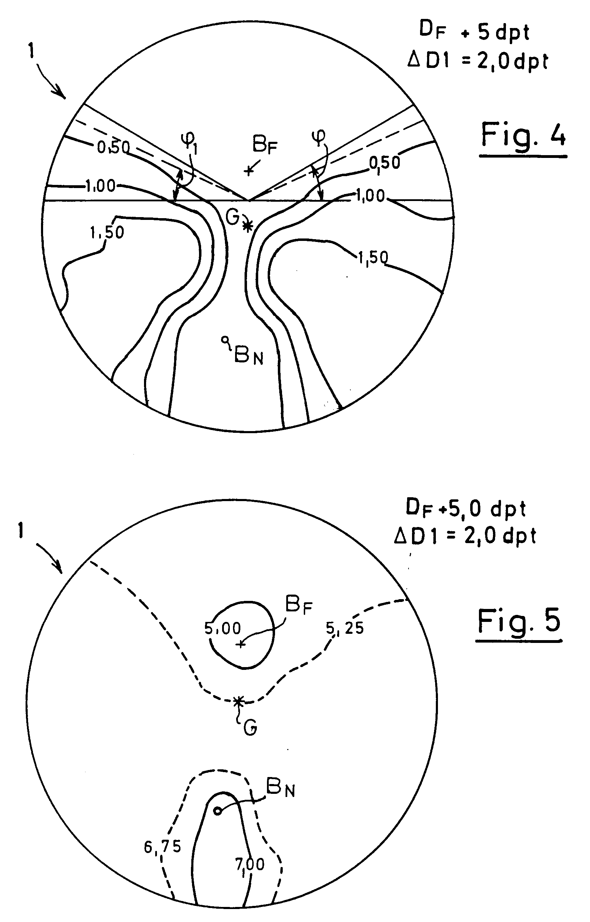

In den Figuren 4 und 5 ist eine Gleitsichtfläche dargestellt, für welche der Flächenzusatz $\Delta D1$ + 2,0 dpt beträgt. Man erkennt aus der Darstellung der Figur 4, daß Werte des Flächenastigmatismus von 2,0 dpt wieder außerhalb des dargestellten Durchmessers liegen und daß in der Fernsichtzone sowohl für einen Winkel $\varphi$ von 30° als auch für einen Winkel $\varphi_1$ von 25° der Flächenastigmatismus unterhalb des Wertes von 0,5 dpt

EP 0 452 802 B1

liegt.

75% des Flächenzusatzes $\Delta D1$ werden auf einer Länge von ca. 9 mm in der Progressionszone erreicht. Die Progressionszone selbst weist eine Breite auf, die für einen Flächenastigmatismus < 0,5 dpt an jeder Stelle größer als 2,5 mm ist. Die Breite der Nahsichtzone für einen Flächenastigmatismus < 0,5 dpt, gemessen in der Höhe des Nahbezugspunktes $B_N$ ist > 12 mm.

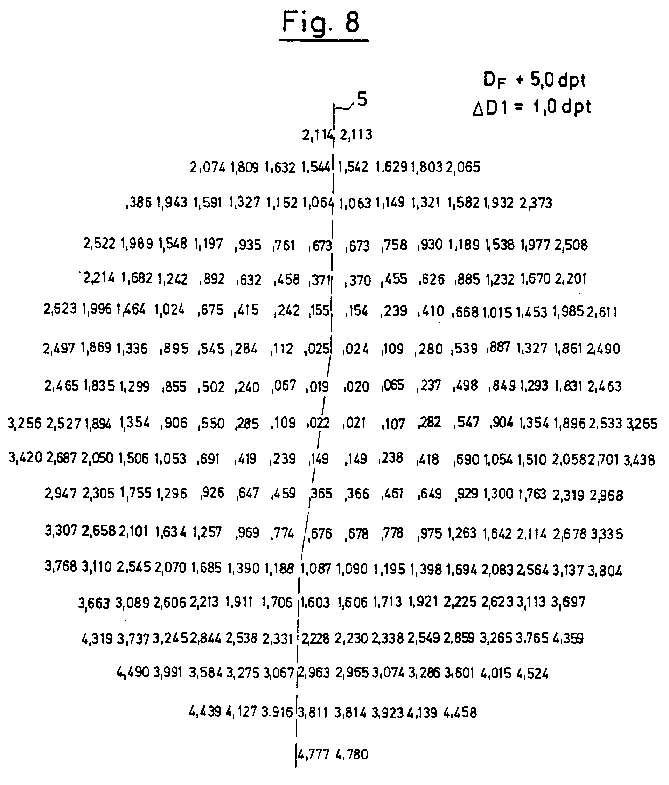

Die Gleitsichtfläche nach den Figuren 2 und 3 ist in Figur 8 in Pfeilhöhen-Darstellung bezüglich einer Ebene gezeigt. In diese Darstellung ist der Verlauf der Hauptblicklinie (5) eingezeichnet; das Gitterraster beträgt 3 mm.

Die Figuren 6 und 7 zeigen eine Gleitsichtfläche nach der Erfindung für einen Flächenzusatz $\Delta D1$ von + 3,0 dpt. Aus Figur 6 ist ersichtlich daß auch in diesem Beispiel für einen Winkel $\varphi$ von 35° und für einen Winkel $\varphi_1$ von 30° der Flächenastigmatismus unterhalb eines Wertes von 0,5 dpt bleibt.

Figur 7 zeigt, daß 75% des Flächenzusatzes $\Delta D1$ auf einer Länge von ca. 9 mm in der Progressionszone erreicht werden. Die Progressionszone selbst hat für einen Flächenastigmatismus < 0,5 dpt überall eine Mindestbreite > 2 mm. In der Höhe des Nahbezugspunktes $B_N$ ist die Breite der Nahsichtzone für einen Flächenastigmatismus < 0,5 dpt > als 10 mm.

Die Figuren 2, 4 und 6 zeigen auch, daß im gesamten Bereich der Gleitsichtfläche bis zu einem Durchmesser von 50 mm, d.h. bis zu einem Sehwinkel von etwa 40° der Flächenastigmatismus kleiner 1,1 x $\Delta D1$ ist, ja daß er sogar Werte von 1,0 x $\Delta D1$ nicht erreicht.

Die vorstehenden Ausführungen beziehen sich auf eine Gleitsichtfläche, welche objektseitig angebracht ist. Bei augenseitiger Anbringung der Gleitsichtfläche sind die Überlegungen sinngemäß zu modifizieren.

**Patentansprüche**

1. Gleitsichtlinse mit einer Gleitsichtfläche die zweimal stetig differenzierbar ausgebildet ist mit einer Fernsicht- und einer Nahsichtzone und einer dazwischenliegenden Progressionszone, mit einem mittleren Flächenbrechwert in der Fernsichtzone (2) zwischen + 3,0 dpt und + 7,0 dpt, mit einem Anstieg des mittleren Flächenbrechwertes in der Progressionszone (3) um einen Flächenzusatz $\Delta D1$ zwischen + 0,75 dpt und + 3,0 dpt bis zur Nahsichtzone (4) und mit einer nicht-ombilischen Hauptblicklinie (5) die von der Fern- zur Nahsichtzone als eine zur Nase hin geschwungene Kurve verläuft und die die Gleitsichtfläche (1) in ein nasales und ein temporales Gebiet teilt, dadurch gekennzeichnet, daß die Kombination der folgenden Merkmale erfüllt ist

   a) der Nahbezugspunkt $B_N$ liegt höchstens 21 mm unterhalb des Fernbezugspunktes $B_F$, wobei der Punkt $B_N$ entsprechend dem Verlauf der Hauptblicklinie (5) gegenüber $B_F$ zwischen 2 und 3,5 mm nasal versetzt ist;

   b) an allen Punkten im Fernsichtbereich, die von einem Punkt G, der 7 mm unterhalb des Fernbezugspunktes $B_F$ liegt, höchstens 25 mm entfernt liegen, und die innerhalb eines auf der Spitze stehenden Kreissektors liegen, dessen Spitze auf einem Punkt liegt, der 4 mm senkrecht unter dem Fernbezugspunkt $B_F$ liegt, und dessen Schenkel mit einer Horizontalen durch diesen Punkt einen Winkel $\varphi$ > 45° - 30°/$\Delta D1$ einschließen, ist der Flächenastigmatismus kleiner als 0,5 dpt;

   c) 75% des Flächenzusatzes $\Delta D1$ werden auf einer Länge von maximal 10 mm auf der Hauptblicklinie (5) in der Progressionszone (3) erreicht;

   d) in der Progressionszone ist der Flächenastigmatismus in einem mindestens 5/$\Delta D1$ mm breiten Bereich kleiner als 0,5 dpt;

   e) in der Höhe des Nahbezugspunkts $B_N$ ist der Flächenastigmatismus in einem mindestens 7 + 9/$\Delta D1$ mm breiten Bereich kleiner als 0,5 dpt;

   f) an allen Punkten der Gleitsichtfläche, die vom Punkt G höchstens 25 mm entfernt sind, ist der Flächenastigmatismus kleiner als 1,1·$\Delta D1$ dpt,

   wobei in den Merkmalen b), d), e) und f) der Wert von D1 jeweils als dimensionslose Zahl einzusetzen ist.

2. Gleitsichtlinse nach Anspruch 1 bei der

$$\varphi > 40° - 30°/\Delta D1.$$

3. Gleitsichtlinse nach Anspruch 1 oder 2 bei dem an allen Punkten der Gleitsichtfläche, die vom Punkt G höchstens 25 mm entfernt sind, der Flächenastigmatismus kleiner als $\Delta D1$ dpt ist.

4. Gleitsichtfläche nach einem der Ansprüche 1 bis 3, dadurch gekennzeichnet, daß der Nahbezugspunkt

5

$B_N$ 2,5 mm nasal versetzt ist.

## Claims

1. A multifocal spectacle lens having a multifocal surface, which is configured to be twice continuously differentiable, having a far-vision zone (2), a near-vision zone and a progression zone disposed therebetween, with a mean surface refractive power between +3.0 dpt and +7.0 dpt in the far-vision zone, with an increase of the mean surface refractive power in the progression zone (3) by a surface increment $\Delta D1$ between +0.75 dpt and +3.0 dpt up to the near-vision zone (4) and with a non-umbilical principal viewing line (5), which traces a curve from the far-vision zone to the near-vision zone with the curve being swung toward the nose and partitioning the multifocal surface (1) into a nasal region and a temporal region, the multifocal surface comprising the following combination of features:

   a) the near-reference point $B_N$ lies at most 21 mm below the far-reference point $B_F$ with the point $B_N$ being offset with respect to $B_F$ corresponding to the trace of the principal viewing line (5) between 2 and 3.5 mm nasally;

   b) a point G lies 7 mm below the far-reference point $B_F$, the surface astigmatism is less then 0.5 dpt at every point in the far-version region having a distance from the point G less then 25 mm and are arranged inside a circular sector, this circular sector is down laying having its center at a point 4 mm vertical under the far-reference point $B_F$ and between the sides of the circular sector and the horizontal through the point 4 mm vertical under the far-reference point $B_F$ there is an angle $\varphi > 45° - 30°/\Delta D1$;

   c) 75 % of the surface increment $\Delta D1$ is reached along a distance of at most 10 mm on the principal viewing line (5) in the progression zone (3);

   d) in the progressive zone the surface astigmatism is less then 0.5 dpt in an area which width is at least $5/\Delta D1$;

   e) at the elevation of the near-reference point $B_N$ the surface astigmatism is less then 0.5 dpt in an area which width is at least $7 + 9/\Delta D1$;

   f) at every point in the overall region of the multifocal surface with a distance from the point G less then 25 mm, the surface astigmatism is less then $1.1*\Delta D1$;

   whereby the value of D1 in the characteristics of b), d), e) and f) is used as a dimensionless numeral.

2. The multifocal spectacle lens of claim 1 with
$$\varphi > 40° - 30°/\Delta D1.$$

3. The multifocal spectacle lens of claim 1 or 2, wherein: at every point of the multifocal surface having a distance to point G less then 25 mm, the surface astigmatism is less then $\Delta D1$ dpt.

4. The multifocal spectacle lens of claim 1, 2 or 3, wherein: the near-reference point $B_N$ is displaced 2.5 mm nasally.

## Revendications

1. Verre progressif possédant une surface progressive qui est construite sous une forme susceptible de double différentiation constante, comportant une zone de vision de loin et une zone de vision de près, ainsi qu'une zone de progression interposée entre les premières, possédant une puissance de surface moyenne dans la zone de vision de loin (2) comprise entre + 3,0 dpt et + 7,0 dpt, avec un accroissement de la puissance de surface moyenne dans la zone de progression (3) d'une addition de surface $\Delta D1$ comprise entre + 075 dpt et + 3,0 dpt jusqu'à la zone de vision de près (4) et une ligne de regard principale non ombilicale (5) qui présnte la forme d'une courbe qui se déporte vers le nez lorsqu'on va de la zone de vision de loin à la zone de vision de près et qui divise la surface progressive (1) en un domaine nasal et un domaine temporal, caractérisé en ce que la combinaison des conditions suivantes est réalisée :

   a) le point de référence de vision de près $B_N$ est placé au maximum à 21 mm au-dessous du point de référence de vision de loin $B_F$, le point $B_N$ étant déporté d'une distance d'entre 2 et 3,5 mm dans la direction nasale par rapport à $B_F$, en suivant le profil de la ligne de visée principale (16) ;

   b) en tous les points de la région de vision de loin qui sont éloignés au maximum de 25 mm d'un point G qui se trouve à 7 mm au-dessous du point de référence de vision de loin $B_F$, et qui se trouve à l'intérieur d'un secteur de cercle sur pointe dont la pointe se trouve sur un point qui est situé lui-même à 4 mm à la verticale au-dessous du point de référence de vision de loin $B_F$, et dont les branches forment un angle $\varphi > 45°$ à $30°/\Delta D1$ avec l'horizontale passant par ce point, l'astigmatisme de surface est inférieur à 0,5 dpt,

c) 75 % de l'addition de surface $\Delta D1$ sont atteints sur une longueur de 10 mm au maximum de la ligne de visée principale (5) dans la zone de progression (3) ;

d) dans la zone de progression, l'astigmatisme de surface est inférieur à 0,5 dpt dans une région large d'au moins $5/\Delta D1$ mm ;

e) à la hauteur du point de référence de vision de près $B_N$, l'astigmatisme de surface est inférieur à 0,5 dpt dans une région large d'au moins $7 + 9/\Delta D1$ mm ;

f) en tous les points de la surface progressive qui sont éloignés de 25 mm au maximum du point G, l'astigmatisme de surface est inférieur à $1,1 \Delta D1$ dpt,

la valeur de D1 devant être introduite sous la forme d'un coefficient sans dimension dans les conditions b), d), e) et f)

2. Verre progressif selon la revendication 1, dans lequel

$$\varphi > 40° - 30°/\Delta D1.$$

3. Verre progressif selon la revendication 1 ou 2, dans lequel, en tous les points de la surface progressive qui sont éloignés du point G de 25 mm au maximum, l'astigmatisme de surface est inférieur à $\Delta D1$ dpt.

4. Surface progressive selon une des revendications 1 à 3, caractérisée en ce que le point de référence de la vision de près $B_N$ est déporté de 2,5 mm dans la direction nasale.

temporal    nasal

Fig.1

$D_F + 5.0\ dpt$
$\triangle D1 = 1.0\ dpt$

Fig. 2

$D_F + 5\ dpt$
$\triangle D1 = 1.0\ dpt$

Fig. 3

$D_F$ + 5 dpt
$\triangle D1$ = 2,0 dpt

Fig. 4

$D_F$ +5,0 dpt
$\triangle D1$ = 2,0 dpt

Fig. 5

$D_F$ + 5,0 dpt
$\triangle D1$ = 3,0 dpt

Fig. 6

$D_F$ + 5,0 dpt
$\triangle D1$ = 3,0 dpt

Fig. 7

# Fig. 8

$D_F$ + 5,0 dpt
$\triangle D1$ = 1,0 dpt

2,114 2,113

2,074 1,809 1,632 1,544 1,542 1,629 1,803 2,065

,386 1,943 1,591 1,327 1,152 1,064 1,063 1,149 1,321 1,582 1,932 2,373

2,522 1,989 1,548 1,197 ,935 ,761 ,673 ,673 ,758 ,930 1,189 1,538 1,977 2,508

2,214 1,682 1,242 ,892 ,632 ,458 ,371 ,370 ,455 ,626 ,885 1,232 1,670 2,201

2,623 1,996 1,464 1,024 ,675 ,415 ,242 ,155 ,154 ,239 ,410 ,668 1,015 1,453 1,985 2,611

2,497 1,869 1,336 ,895 ,545 ,284 ,112 ,025 ,024 ,109 ,280 ,539 ,887 1,327 1,861 2,490

2,465 1,835 1,299 ,855 ,502 ,240 ,067 ,019 ,020 ,065 ,237 ,498 ,849 1,293 1,831 2,463

3,256 2,527 1,894 1,354 ,906 ,550 ,285 ,109 ,022 ,021 ,107 ,282 ,547 ,904 1,354 1,896 2,533 3,265

3,420 2,687 2,050 1,506 1,053 ,691 ,419 ,239 ,149 ,149 ,238 ,418 ,690 1,054 1,510 2,058 2,701 3,438

2,947 2,305 1,755 1,296 ,926 ,647 ,459 ,365 ,366 ,461 ,649 ,929 1,300 1,763 2,319 2,968

3,307 2,658 2,101 1,634 1,257 ,969 ,774 ,676 ,678 ,778 ,975 1,263 1,642 2,114 2,678 3,335

3,768 3,110 2,545 2,070 1,685 1,390 1,188 1,087 1,090 1,195 1,398 1,694 2,083 2,564 3,137 3,804

3,663 3,089 2,606 2,213 1,911 1,706 1,603 1,606 1,713 1,921 2,225 2,623 3,113 3,697

4,319 3,737 3,245 2,844 2,538 2,331 2,228 2,230 2,338 2,549 2,859 3,265 3,765 4,359

4,490 3,991 3,584 3,275 3,067 2,963 2,965 3,074 3,286 3,601 4,015 4,524

4,439 4,127 3,916 3,811 3,814 3,923 4,139 4,458

4,777 4,780